**Europäisches Patentamt**

**European Patent Office**

**Office européen des brevets**

(19)

(11) Veröffentlichungsnummer: **0 207 408**
**B1**

(12) # EUROPÄISCHE PATENTSCHRIFT

(45) Veröffentlichungstag der Patentschrift:
16.05.90

(21) Anmeldenummer: 86108484.6

(22) Anmeldetag: 20.06.86

(51) Int. Cl.⁵: **H02M 7/529,** H02M 7/53

(54) **Verfahren zur Steuerung des Phasenwinkels des Ausgangsstroms oder der Ausgangsspannung eines Umrichters und Einrichtung zur Durchführung.**

(30) Priorität: 03.07.85 DE 3523837

(43) Veröffentlichungstag der Anmeldung:
07.01.87 Patentblatt 87/2

(45) Bekanntmachung des Hinweises auf die Patenterteilung:
16.05.90 Patentblatt 90/20

(84) Benannte Vertragsstaaten:
AT CH DE LI

(56) Entgegenhaltungen:
EP-A- 0 106 006
DE-A- 3 130 672

(73) Patentinhaber: Siemens Aktiengesellschaft,
Wittelsbacherplatz 2, D-8000 München 2(DE)

(72) Erfinder: Heinle, Georg, Dipl.-Ing., Moorbachweg 14,
D-8520 Erlangen(DE)

## Beschreibung

Die Erfindung bezieht sich zum einen auf ein Verfahren zur Steuerung des Phasenwinkels des Ausgangsstroms eines Umrichters mit Gleichstrom-Zwischenkreis, wobei ein Wechselrichterteil des Umrichters sechs in einer dreiphasigen Brückenschaltung angeordnete elektronische Schalter aufweist, die paarweise in sechs mögliche Schaltkombinationen ansteuerbar sind, denen jeweils ein einem natürlichen Vielfachen von 60° el entsprechender primärer Phasenwinkel zugeordnet ist, wobei jeder Sollwert für den Phasenwinkel des Ausgangsstroms einer Ansteuereinheit für den Wechselrichter zugeführt ist, welche die beiden dem Phasenwinkel des Ausgangsstroms jeweils unmittelbar benachbarten primären Phasenwinkel detektiert und die diesen zugeordneten Schaltkombinationen mit einem Wechseltakt so hin- und herschaltet, daß der Phasenwinkel des Ausgangsstroms mit dem vorgegebenen Sollwert übereinstimmt.

Zum anderen bezieht sich die Erfindung auf ein Verfahren zur Steuerung des Phasenwinkels der Ausgangsspannung eines Umrichters mit Gleichspannungs-Zwischenkreis, wobei ein Wechselrichterteil des Umrichters sechs in einer dreiphasigen Brückenschaltung angeordnete elektronische Schalter aufweist, die in Dreiergruppen in sechs mögliche Schaltkombinationen ansteuerbar sind, denen jeweils ein einem natürlichen Vielfachen von 60° el entsprechender primärer Phasenwinkel zugeordnet ist und durch die mindestens eine weitere Schaltkombination auslösbar ist, der ein spannungsloser Zustand entspricht, wobei jeder Sollwert für den Phasenwinkel der Ausgangsspannung einer Ansteuereinheit für den Wechselrichterteil zugeführt wird, welche die beiden dem Phasenwinkel der Ausgangsspannung jeweils unmittelbar benachbarten primären Phasenwinkel detektiert und die diesen zugeordneten Schaltkombinationen mit einem Wechseltakt so hin- und herschaltet, daß der Phasenwinkel der Ausgangsspannung mit dem vorgegebenen Sollwert übereinstimmt.

Aus der DE-OS 31 30 672 ist ein Verfahren der eingangs genannten Art bekannt. Dabei wird die Periodendauer des Wechseltaktes entweder konstant gehalten (Freilauf) oder so gewählt, daß die Periodendauer einen natürlichen Bruchteil der Periodendauer der Umrichterfrequenz darstellt (synchrones Pulsen). Für das Schalten des Wechseltaktes, das in einem phasenwinkelabhängigen Puls-Pausen-Verhältnis erfolgt, müssen aufgrund der endlichen Kommutierungszeiten der elektronischen Schalter bzw. des Leistungsteils Mindestimpulszeiten eingehalten werden. Sofern diese Mindestimpulszeiten nicht eingehalten werden, sind die entsprechenden Impulse zu unterdrücken, was zu Abweichungen vom gewünschten Strom-bzw. Spannungsverlauf führt.

Aufgabe der Erfindung ist es, ein Verfahren der eingangs genannten Art so auszubilden, daß auch bei kleinem Puls-Pausen-Verhältnis die Mindestimpulszeiten eingehalten werden, so daß der Rundlauf von dem Umrichter nachgeschalteten Maschinen verbessert wird.

Gemäß der Erfindung wird für Umrichter mit Stromzwischenkreis diese Aufgabe dadurch gelöst, daß die Periodendauer des Wechseltaktes so vom Sollwert für den Phasenwinkel gesteuert wird, daß die Periodendauer eines mit seinem Phasenwinkel mittig zwischen zwei primären Phasenwinkeln gelegenen Ausgangsstroms einen Minimalwert aufweist und die Periodendauer eines mit seinem Phasenwinkel einem primären Phasenwinkel entsprechenden Ausgangsstroms einen Maximalwert aufweist.

Zum anderen wird für Umrichter mit Gleichspannungs-Zwischenkreis diese Aufgabe dadurch gelöst, daß die Periodendauer des Wechseltaktes so vom Sollwert für den Phasenwinkel gesteuert wird, daß die Periodendauer einer mit ihrem Phasenwinkel mittig zwischen zwei primären Phasenwinkeln gelegenen Ausgangsspannung einen Minimalwert aufweist und die Periodendauer einer mit ihrem Phasenwinkel einem primären Phasenwinkel entsprechenden Ausgangsspannung einen Maximalwert aufweist.

Eine vorteilhafte Ausbildung der Erfindung ist dadurch gekennzeichnet, daß die Periodendauer linear mit dem Phasenwinkel vom Minimalwert zum jeweils unmittelbar benachbarten Maximalwert verläuft. Damit ergibt sich ein einfacher Zusammenhang zwischen dem Phasenwinkel und der Periodendauer, der schaltungstechnisch leicht realisiert werden kann.

Eine Einrichtung zur Durchführung des Verfahrens ist dadurch gekennzeichnet, daß eine der Lage des Phasenwinkels zwischen zwei unmittelbar benachbarten primären Phasenwinkeln linear proportionale erste Steuerspannung dem ersten Eingang eines Komparators für einen Größer-Kleiner-Vergleich zuführbar ist, daß als zweite Steuerspannung eine Wechselspannung dem zweiten Eingang des Komparators zuführbar ist, deren Frequenz dreieckförmig entsprechend der Lage des Phasenwinkels wobbelbar ist, und daß entsprechend dem Vergleichsergebnis durch Steuersignale des Komparators der Wechseltakt für das Schalten der dem Phasenwinkel des Ausgangsstrom oder der Ausgangsspannung benachbarten primären Phasenwinkel auslösbar ist. Damit ergibt sich eine ausgesprochen einfache Schaltungsanordnung.

Eine vorteilhafte Ausbildung der oben genannten Einrichtung ist so ausgestaltet, daß der Frequenzhub der zweiten Steuerspannung mit sinkender Umrichterfrequenz vergrößerbar ist. Das hat zur Folge, daß auch bei geringer Umrichterfrequenz noch genügend häufig innerhalb eines 60° el-Sektors umgetastet werden kann, um den angestrebten Sollwert durch Tastung gut nachzubilden.

Ein Ausführungsbeispiel der Erfindung ist in der Zeichnung dargestellt und wird im folgenden näher erläutert.

Dabei zeigen

Figur 1 das Blockschaltbild eines Umrichters mit Gleichtrom-Zwischenkreis und
Figur 2 eine Ansteuereinheit.

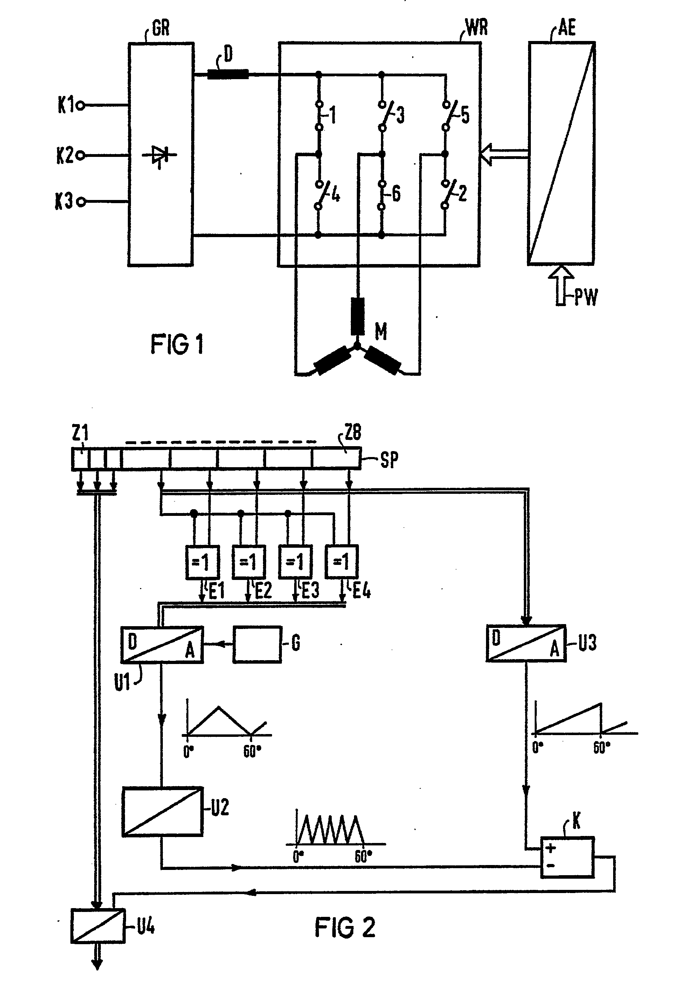

In der Darstellung gemäß Figur 1 ist ein Gleichrichter GR gezeigt, der über Klemmen K1, K2 und K3 von einer dreiphasigen Netzspannung gespeist wird. Der vom Gleichrichter GR ausgespeiste Gleichstrom wird über eine Drossel D als Zwischenkreis-Gleichstrom einem Wechselrichter WR zugeführt. Dieser besteht prinzipiell aus sechs in einer dreiphasigen Brückenschaltung angeordneten elektronischen Schaltern 1 bis 6.

Mit Hilfe der Schalter 1 bis 6, die paarweise betätigt werden, sind sechs mögliche Schaltkombinationen realisierbar, die dazu dienen, daß ein dreiphasiger Motor M mit einem Ausgangsstrom eines vorgegebenen Phasenwinkels gesteuert werden kann. Natürliche Vielfache von 60° el werden durch Einstellen jeweils einer der sechs möglichen Schaltkombinationen erreicht. Im Ausführungsbeispiel ist beispielsweise ein Schließen der Schalter 1 und 6 gezeigt, so daß der Strom in diesem Fall entsprechend dem mit stark ausgezogenen Linien gezeichneten Strompfad geleitet wird.

Sofern von diesen primären Phasenwinkeln abweichende Phasenwinkel des Ausgangsstroms zu realisieren sind, erfolgt dies dadurch, daß abwechselnd benachbarte primäre Phasenwinkel eingestellt werden und damit ein Hin- und Herschalten in entsprechend dem einzustellenden Phasenwinkel vorgegebenen Puls-Pausen-Verhältnissen erfolgt. Das Ansteuern der Schalter 1 bis 6 bewirkt eine Ansteuereinheit AE, der eingangsseitig der jeweilige Sollwert für den Phasenwinkel des Ausgangsstroms des Umrichters zugeführt wird. Eine prinzipielle Ausbildungsmöglichkeit der Ansteuereinheit AE ist in der Darstellung gemäß Figur 2 gezeigt.

Dabei wird der Sollwert für den Phasenwinkel in digitaler Form einem Speicher SP eingeprägt. Dieser Speicher SP ist in einzelne Zellen Z1 bis Z8 eingeteilt, von denen die Zellen Z1 bis Z3 eine Kennzahl für den jeweiligen Sektor zwischen den möglichen primären Phasenwinkeln beinhalten und die Zellen Z4 bis Z8 den jeweiligen Winkel zwischen den primären Phasenwinkeln angeben. Im Ausführungsbeispiel wäre der Winkel zwischen zwei primären Phasenwinkeln in 32 Binärschritte aufteilbar, die von Sektor zu Sektor jeweils zyklisch durchlaufen werden.

Über ein Bussystem gelangt der Inhalt der Speicherzellen Z4 bis Z8 an einen ersten Digital-Analog-Umsetzer U3, der bei gleichförmigem Durchlaufen des binären Zahlenraums ein sägezahnförmiges Analogsignal für jeweils 60° el erzeugt, wie dies unterhalb des Umsetzers U3 diagrammmäßig angedeutet ist. Dieses Analogsignal gelangt als erste Steuerspannung an den nicht invertierenden Eingang eines als Größer-Kleiner-Vergleicher vorgesehenen Komparators K.

Ferner wird der Inhalt der Speicherzellen Z5 bis Z8 jeweils einem ersten Eingang von Exklusiv-Oder-Gliedern E1 bis E4 zugeführt, deren jeweils zweiter Eingang mit der Speicherzelle Z4 verbunden ist. Durch diese logische Verknüpfung wird von den Ausgängen der Exklusiv-Oder-Glieder E1 bis E4 an einen Digital-Analog-Umsetzer U1 eine von der in den Speicherzellen Z4 bis Z8 gespeicherten Binärzahl 00000 bis zur Binärzahl 01111 aufsteigende und von der Binärzahl 10000 bis zur Binärzahl 11111 abfallende Binärzahlenfolge (0000 bis 1111 bis 0000) erzeugt.

Vom Umsetzer U1 wird ein der jeweils zugeführten Binärzahl proportionales Spannungssignal erzeugt, wobei der Umsetzfaktor mit Hilfe eines Gebers G in der Weise festgelegt wird, daß mit sinkender Umrichterfrequenz die resultierende Ausgangsspannung erhöht wird.

Das Ausgangssignal des Umsetzers U1 (in einem Diagramm unmittelbar unterhalb des Umsetzers angedeutet) gelangt an einen Umsetzer U2, der als Spannungs-Frequenzumsetzer ausgebildet ist. Vom Umsetzer U2 wird ein Wechselspannungssignal als zweite Steuerspannung erzeugt, die dem invertierenden Eingang des Komparators K zugeführt wird. Diese zweite Steuerspannung ist als Diagramm neben dem Umsetzer U2 angedeutet. Der Frequenzhub der zweiten Steuerspannung wird dabei durch die Amplitude des Ausgangssignals des Umsetzers U1 bestimmt.

Die Sektornummer des jeweils vorgegebenen Phasenwinkels gelangt über ein Bussystem vom Speicher SP an einen Umsetzer U4. In diesem Umsetzer U4 wird anhand der Sektornummer festgelegt, welche beiden benachbarten primären Phasenwinkel dieser Sektornummer zuzuordnen sind. Abhängig vom Ausgangssignal des Komparators K werden diese primären Phasenwinkel getaktet. Ein entsprechendes Steuersignal gelangt dann vom Umsetzer U4 an den Wechselrichter gemäß Figur 1, um die Schalter 1 bis 6 zu betätigen.

Sofern ein synchrones Pulsen angestrebt wird, wäre die Anzahl von Pulsungen pro Sektor zur Durchlaufzeit für einen Sektor in Beziehung zu setzen. Die resultierende mittlere Pulsfrequenz könnte dann mit der Umrichterfrequenz synchronisiert werden. Es ist auch möglich, die Schaltung entsprechend der eingangs genannten DE-OS mit einer zusätzlichen Sinusmodulation zu kombinieren.

Sofern als Umrichter ein solcher mit Spannungszwischenkreis verwendet wird, kann die Amplitude der Ausgangsspannung durch Eintasten des spannungslosen Zustandes relativ leicht beeinflußt werden.

## Patentansprüche

1. Verfahren zur Steuerung des Phasenwinkels des Ausgangsstroms eines Umrichters mit Gleichstrom-Zwischenkreis, wobei ein Wechselrichterteil (WR) des Umrichters sechs in einer dreiphasigen Brückenschaltung angeordnete elektronische Schalter (1–6) aufweist, die paarweise in sechs mögliche Schaltkombinationen ansteuerbar sind, denen jeweils ein einem natürlichen Vielfachen von 60 °el entsprechender primärer Phasenwinkel zugeordnet ist, wobei jeder Sollwert für den Phasenwinkel (PW) des Ausgangsstroms einer Ansteuereinheit (AE) für den Wechselrichter zugeführt wird, welche die beiden Phasenwinkel des Ausgangsstroms jeweils unmittelbar benachbarten primären Phasenwinkel detektiert und die diesen zugeordneten Schaltkombinationen mit einem Wechseltakt so hin- und herschaltet, daß der Phasenwinkel des Ausgangsstroms mit dem vorgegebenen Sollwert übereinstimmt, **dadurch gekennzeichnet**, daß die Periodendauer des Wechseltaktes so vom Sollwert für den Phasenwinkel gesteuert wird, daß die Periodendauer eines mit seinem Phasenwinkel mittig zwischen zwei primären Phasenwinkeln gelegenen Ausgangsstroms einen Minimalwert aufweist und die Periodendauer eines mit seinem Phasenwinkel einem primären Phasenwinkel entsprechenden Ausgangsstroms einen Maximalwert aufweist.

2. Verfahren zur Steuerung des Phasenwinkels der Ausgangsspannung eines Umrichters mit Gleichspannungs-Zwischenkreis, wobei ein Wechselrichterteil (WR) des Umrichters sechs in einer dreiphasigen Brückenschaltung angeordnete elektronische Schalter (1–6) aufweist, die in Dreiergruppen in sechs mögliche Schaltkombinationen ansteuerbar sind, denen jeweils ein einem natürlichem Vielfachen von 60° el entsprechender primärer Phasenwinkel zugeordnet ist und durch die mindestens eine weitere Schaltkombination auslösbar ist, der ein spannungsloser Zustand entspricht, wobei jeder Sollwert für den Phasenwinkel (PW) der Ausgangsspannung einer Ansteuereinheit (AE) für den Wechselrichterteil zugeführt wird, welche die beiden dem Phasenwinkel der Ausgangsspannung jeweils unmittelbar benachbarten primären Phasenwinkel detektiert und die diesen zugeordneten Schaltkombinationen mit einem Wechseltakt so hin- und herschaltet, daß der Phasenwinkel der Ausgangsspannung mit dem vorgegebenen Sollwert übereinstimmt, **dadurch gekennzeichnet**, daß die Periodendauer des Wechseltaktes so vom Sollwert für den Phasenwinkel gesteuert wird, daß die Periodendauer einer mit ihrem Phasenwinkel mittig zwischen zwei primären Phasenwinkeln gelegenen Ausgangsspannung einen Minimalwert aufweist und die Periodendauer einer mit ihrem Phasenwinkel einem primären Phasenwinkel entsprechenden Ausgangsspannung einen Maximalwert aufweist.

3. Verfahren nach Anspruch 1 oder 2, **dadurch gekennzeichnet**, daß die Periodendauer linear mit dem Phasenwinkel vom Minimalwert zum jeweils unmittelbar benachbarten Maximalwert verläuft.

4. Einrichtung zur Durchführung des Verfahrens nach einem der Ansprüche 1 bis 3, **dadurch gekennzeichnet**, daß eine der Lage des Phasenwinkels zwischen zwei unmittelbar benachbarten primären Phasenwinkeln linear proportionale erste Steuerspannung dem ersten Eingang eines Komparators (K) für einen Größer-Kleiner-Vergleich zuführbar ist, daß als zweite Steuerspannung eine Wechselspannung dem zweiten Eingang des Komparators (K) zuführbar ist, deren Frequenz dreieckförmig entsprechend der Lage des Phasenwinkels wobbelbar ist, und daß entsprechend dem Vergleichsergebnis durch Steuersignale des Komparators (K) der Wechseltakt für das Schalten der dem Phasenwinkel des Ausgangsstroms oder der Ausgangsspannung benachbarten primären Phasenwinkel auslösbar ist.

5. Einrichtung nach Anspruch 4, **dadurch gekennzeichnet**, daß der Frequenzhub der zweiten Steuerspannung mit sikender Umrichterfrequenz vergrößerbar ist.

**Claims**

1. A method for controlling the phase angle of the output current of a converter with a direct current link, wherein an inverter part (WR) of the converter has six electronic, switches (1–6) arranged in a three-phase bridge circuit, which are able to be controlled in pairs in six possible switch combinations, to each of which is allocated a primary phase angle corresponding to a natural multiple of 60° el., wherein each desired value for the phase angle (PW) of the output current is supplied to a control unit (AE) for the inverter, which detects the two primary phase angles directly adjacent to the phase angle of the output current and which switches in and out the switch combinations allocated thereto with an alternating clock pulse, such that the phase angle of the output current agrees with the predetermined desired value, characterised in that the period duration of the alternating clock pulse is controlled by the desired value for the phase angle, such that the period duration of an output with its phase angle lying in the centre between two primary phase angles has a minimum value, and the period duration of an output current with its phase angle corresponding to a primary phase angle has a maximum value.

2. A method for controlling the phase angle of the output voltage of a converter with a direct voltage link, wherein an inverter part (WR) of the converter has six electronic switches (1–6) arranged in a three-phase bridge circuit, which are able to be controlled in groups of three in six possible switch combinations, to each of which is allocated a primary phase angle corresponding to a natural multiple of 60° el. which is able to be released by at least one further switch combination, to which a voltage-less state corresponds, whereby each desired value for the phase angle (PW) of the output voltage is supplied to a control unit (AE) for the inverter part, which detects the two primary phase angles directly adjacent to the phase angle of the output voltage, and which switches in and out switch combinations allocated thereto with an alternating clock pulse so that the phase angle of the output voltage agrees with the predetermined desired value, characterised in that the period duration of the alternating clock pulse is controlled by the desired value for the phase angle, such that the period duration of an output voltage with its phase angle lying in the centre between two primary phase angles has a minimum value, and the period duration of an output voltage with it phase angle corresponding to a primary phase angle has a maximum value.

3. A method according to claim 1 or 2, characterised in that the period duration extends linearly with the phase angle from the minimum value to the respective directly adjacent maximum value.

4. A device for carrying out the method according to one of claims 1 to 3, characterised in that a first control voltage linearly proportional to the position of the phase angle between two directly adjacent primary phase angles is led to the first input of a comparator (K) for a larger-smaller-comparison, in that as a second control voltage an alternating voltage is led to the second input of the comparator (K), the frequency of which is able to be swept in a triangular form corresponding to the position of the phase angle, and in that corresponding to the comparison result through control signals of the comparator (K) the alternating clock pulse for switching the primary phase angle adjacent to the phase angle of the output current or of the output voltage is able to be released.

5. A device according to claim 4, characterised in that the frequency deviation of the second control voltage is able to be enlarged with decreasing converter frequency.

## Revendications

1. Procédé pour commander l'angle de phase d'un convertisseur statique comportant un circuit intermédiaire à courant continu, selon lequel une partie formant onduleur (WR) du convertisseur statique comporte six interrupteurs électroniques (1–6), qui sont montés dans un circuit en pont triphasé et peuvent être commandés par couples selon six combinaisons de commutation possibles, auxquelles est associé respectivement un angle de phase primaire qui correspond à un multiple naturel de 60 degrés électriques, chaque valeur de consigne de l'angle de phase (PW) du courant de sortie étant envoyée à une unité de commande (AE), qui est prévue pour l'onduleur, détecte les deux angles de phase primaires qui sont respectivement directement voisins de l'angle de phase du courant de sortie, et réalise une commutation en va-et-vient entre les combinaisons de commutation associées à ces angles de phase, avec une cadence d'alternance de manière que l'angle de phase du courant de sortie coïncide avec la valeur de consigne prédéterminée, caractérisé par le fait que la durée de la période de la cadence d'alternance est commandée par la valeur de consigne de l'angle de phase de manière que la durée de la période d'un courant de sortie, dont l'angle de phase est situé à mi-chemin entre deux angles de phase primaires, possède une valeur minimale et que la durée de la période d'un courant de sortie, dont l'angle de phase correspond à un angle de phase primaire, possède une valeur maximale.

2. Procédé pour commander l'angle de phase de la tension de sortie d'un convertisseur statique comportant un circuit intermédiaire à tension continu, selon lequel une partie formant onduleur (WR) du convertisseur statique comporte six interrupteurs électroniques (1–6), qui sont disposés dans un circuit en pont triphasé et peuvent être commandés par groupes de trois selon six combinaisons de commutation possibles, auxquelles est associé respectivement un angle de phase primaire correspondant à un multiple naturel de 60 degrés électriques, et au moyen desquels peut être déclenchée au moins une autre combinaison de commutation, à laquelle correspond un état sans tension, et selon lequel chaque valeur de consigne de l'angle de phase (PW) de la tension de sortie est envoyée à une unité de commande (AE), qui est prévue pour l'onduleur, détecte les deux angles de phase primaires qui sont respectivement directement voisins de l'angle de phase de la tension de sortie, et réalise une commutation en va-et-vient entre les combinaisons de commutation associées à ces angles de phase, avec une cadence d'alternance de manière que l'angle de phase de la tension de sortie coïncide avec la valeur de consigne prédéterminée, caractérisé par le fait que la durée de la période de la cadence d'alternance est commandée par la valeur de consigne de l'angle de phase de manière que la durée de la période d'une tension de sortie, dont l'angle de phase est situé à mi-chemin entre deux angles de phase primaires, possède une valeur minimale et que la durée de la période d'une tension de sortie, dont l'angle de phase correspond à un angle de phase primaire, possède une valeur maximale.

3. Procédé suivant la revendication 1 ou 2, caractérisé par le fait que la durée de la période varie linéairement avec l'angle de phase depuis la valeur minimale jusqu'à la valeur maximale qui est respectivement directement voisine.

4. Dispositif pour la mise en œuvre du procédé suivant l'une des revendications 1 à 3, caractérisé par le fait qu'une première tension de commande, linéairement proportionnelle à la position de l'angle de phase entre deux angles de phase primaires directement voisins, peut être envoyée à la première entrée d'un comparateur (K) pour une comparaison "supérieur à/inférieur à", qu'à la seconde entrée du comparateur (K) peut être envoyée, comme seconde tension de commande, une tension alternative dont la fréquence peut être vobulée avec une forme triangulaire en fonction de la position de l'angle de phase, et qu'en fonction du résultat de la comparaison, la cadence d'alternance pour la commutation des angles de phase primaires voisins de l'angle de phase du courant de sortie ou de la tension de sortie peut être déclenchée en fonction du résultat de la comparaison, par des signaux de commande du comparateur (K).

5. Dispositif suivant la revendication 4, caractérisé par le fait que l'excursion de fréquence de la seconde tension de commande peut être accrue, lorsque la fréquence du convertisseur statique diminue.

FIG 1

FIG 2